Europäisches Patentamt

European Patent Office

Office européen des brevets

(11) Veröffentlichungsnummer: **0 519 117 A1**

# (12) EUROPÄISCHE PATENTANMELDUNG

(21) Anmeldenummer: **91118590.8**

(22) Anmeldetag: **31.10.91**

(51) Int. Cl.⁵: **B60R 1/06**

(30) Priorität: **15.06.91 DE 4119748**

(43) Veröffentlichungstag der Anmeldung:
**23.12.92 Patentblatt 92/52**

(84) Benannte Vertragsstaaten:
**BE DE ES FR GB GR IT SE**

(71) Anmelder: **HAGUS C. LUCHTENBERG GmbH &
Co. KG
Wiesenstrasse 8-10**

W-5650 Solingen 19(DE)

(72) Erfinder: **Luchtenberg, Curt
Sonnenschein 54
W-5650 Solingen-Wald(DE)**

(74) Vertreter: **Selting, Günther, Dipl.-Ing. et al
Patentanwälte von Kreisler, Selting, Werner
Deichmannhaus am Hauptbahnhof
W-5000 Köln 1(DE)**

(54) Abklappbarer Rückspiegel.

(57) Das Spiegelgehäuse (12) des Rückspiegels kann durch einen von außen einwirkenden Stoß abgeklappt werden oder durch einen Elektromotor (15) an die Fahrzeugkarosserie angeschwenkt werden. Zum Auslösen des Abklappens dient eine mit einer Feder (26) versehene Rastvorrichtung (16). Beim Anschwenken an die Fahrzeugkarosserie dreht der Motor (15) die gesamte Rastvorrichtung (16), deren Rastteile (24,25) in Eingriff bleiben. Beim Anstoßen gegen ein Hindernis hält der selbsthemmende Antrieb (14) das fußseitige Rastelement (17) fest, so daß bei Überschreiten der Auslösekraft das gehäuseseitige Rastelement (18) gedreht wird.

FIG.3

Die Erfindung betrifft einen abklappbaren Rückspiegel, der als Außenspiegel an einem Fahrzeug angebracht ist.

Die Sicherheitsvorschriften sehen vor, daß ein an einem Fahrzeug angebrachter Außenspiegel beim Anstoßen gegen ein Hindernis nachgibt und an die Fahrzeugkarosserie anklappt. Bei Außenspiegeln, bei denen das Spiegelglas von einem feststehenden Spiegelgehäuse umschlossen ist, muß das Spiegelgehäuse abklappbar sein. Derartige abklappbare Rückspiegel haben eine Rastvorrichtung, die bei Überschreiten einer Grenzkraft ausgelöst wird, so daß das Spiegelgehäuse relativ zu dem Spiegelfuß um eine im wesentlichen vertikale Achse herum an das Fahrzeug anklappen kann.

Bekannt sind ferner Rückspiegel, bei denen das Spiegelgehäuse mit einem Motorantrieb an die Fahrzeugkarosserie angeschwenkt werden kann, um das Fahrzeug in enge Garageneinfahrten oder an Hindernissen vorbeifahren zu können. Dabei ist der zum Abklappen erforderliche Mechanismus mit dem zum motorischen Anschwenken vorhandenen Antrieb gekoppelt, d.h. beim Abklappen infolge Anstoßens gegen ein Hindernis wird die Welle des Antriebsmotors zurückgedreht. Hierbei steht die Welle des Antriebsmotors in ständiger Ankupplung an das Spiegelgehäuse. Um zu vermeiden, daß das Gehäuse des Außenspiegels durch Winddruck verschwenkt wird, muß der Antriebsmechanismus eine relativ große Reibung im Schwenkgelenk haben. Andererseits muß der Motor so ausgelegt sein, daß er diese Reibung überwinden kann. Im Stand der Technik werden für den Schwenkantrieb des Spiegelgehäuses relativ großvolumige und langsam rotierende Elektromotoren von relativ großer Leistung benutzt. Diese Elektromotoren sind im Innern des Spiegelgehäuses untergebracht, wodurch das Volumen und die Abmessungen des Spiegelgehäuses vergrößert werden. Außerdem sind Endschalter erforderlich, die den Motor bei Erreichen der Normalstellung und der Schwenkstellung abschalten.

Der Erfindung liegt die Aufgabe zugrunde, einen abklappbaren Rückspiegel zu schaffen, der zum Zwecke des gesteuerten Anschwenkens des Spiegelgehäuses an das Fahrzeug mit einem kleinformatigen Antrieb geringer Leistung auskommt.

Die Lösung dieser Aufgabe erfolgt erfindungsgemäß mit den im Patentanspruch 1 angegebenen Merkmalen.

Bei dem erfindungsgemäßen Rückspiegel sind die beim Anstoßen gegen ein Hindernis wirksame Rastvorrichtung und die zum gesteuerten Abschwenken des Spiegelgehäuses dienende Schwenkvorrichtung wirkungsmäßig voneinander getrennt. Die Rastvorrichtung ist insgesamt in Bezug auf den Spiegelfuß drehbar, wobei beide Rastelemente durch den Antrieb gleichermaßen und in gegenseitigem Eingriff gedreht werden. Auf diese Weise bleibt die Rastvorrichtung beim gesteuerten Verschwenken des Spiegelgehäuses in Eingriff und der Antrieb muß nicht die Haltekraft der Rastvorrichtung überwinden. Daher kann die Schwenkbewegung reibungsarm und mit geringer Kraft durchgeführt werden. Die Auslösekraft der Rasteinrichtung kann unabhägig vom Schwenkantrieb eingestellt werden und sie kann insbesondere so bemessen werden, daß das Spiegelgehäuse dem Winddruck stark und ohne Vibrationen standhält. Bei einem gegen das Spiegelgehäuse wirkenden Stoß hält der Antrieb das fußseitige Rastelement fest, während das spiegelseitige Rastelement sich löst und das Spiegelgehäuse für die Verschwenkung freigibt. Das Festhalten des fußseitigen Rastelements erfolgt dadurch, daß der Antrieb selbsthemmend ist, also durch mechanische Blockierung durch den Antrieb, ohne daß hierbei eine externe Kraft aufgewendet werden müßte oder ein Energieverbrauch erfolgen würde. Die Eigenschaft der Selbsthemmung des Antriebes wird also in sinnvoller Weise ausgenutzt, um das fußseitige Rastelement festzuhalten, solange der Antrieb nicht in Funktion ist.

Für den Antrieb eignet sich insbesondere ein Spindel- oder Schneckentrieb, der bekanntlich rückwirkungsfrei ist, d.h. bei dem eine auf die Ausgangswelle wirkende Drehkraft infolge von Selbsthemmung nicht imstande ist, die Eingangswelle zu drehen. Ein Schneckentrieb hat außerdem den Vorteil eines hohen Untersetzungsverhältnisses. Es ist damit möglich, für den Antrieb einen schnellaufenden kleinformatigen Elektromotor geringer Leistung zu verwenden.

Gemäß einer vorteilhaften Weiterbildung der Erfindung ist der Antrieb für die Schwenkbewegung des Spiegelgehäuses im Spiegelfuß untergebracht. Dies hat den Vorteil, daß der im Spiegelgehäuse zur Verfügung stehende Platz anderweitig genutzt werden kann, z.B. für die Unterbringung der Verstellvorrichtung für das Spiegelglas, für eine Spiegelheizung o.dgl.. Andererseits kann das Spiegelgehäuse relativ klein ausgebildet werden, wodurch seine Kosten gesenkt werden und der Windwiderstand verringert wird.

Im folgenden wird unter Bezugnahme auf die Zeichnungen ein Ausführugnsbeispiel der Erfindung näher erläutert.

Es zeigen :

Fig. 1   eine Ansicht des Rückspiegels aus der Sicht des Fahrers,

Fig. 2   eine Draufsicht des Spiegels mit den möglichen Abklappstellungen,

Fig. 3   einen Schnitt entlang der Linie III-III von Fig. 2,

Fig. 4   eine schematische Darstellung mit einem Schnitt im wesentlichen entlang der Linie IV-IV von Fig. 3 und

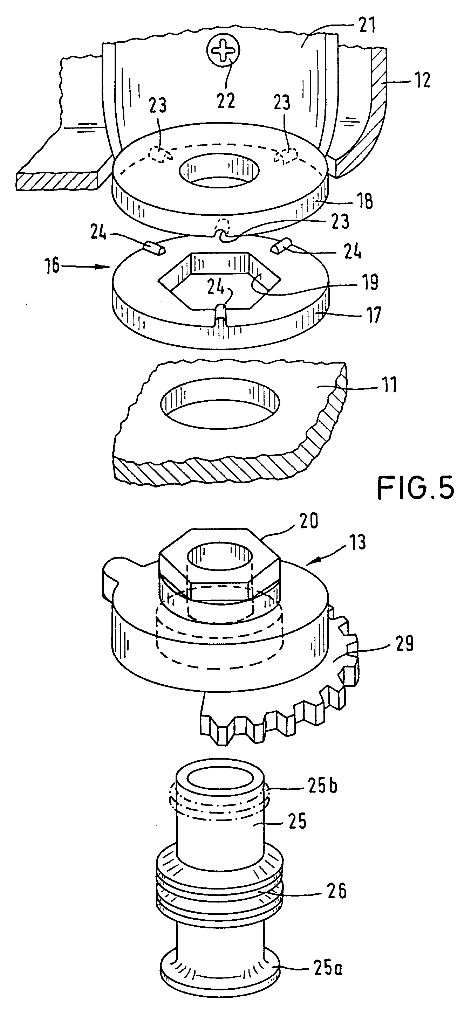

Fig. 5 eine Explosionsdarstellung der Vorrichtung.

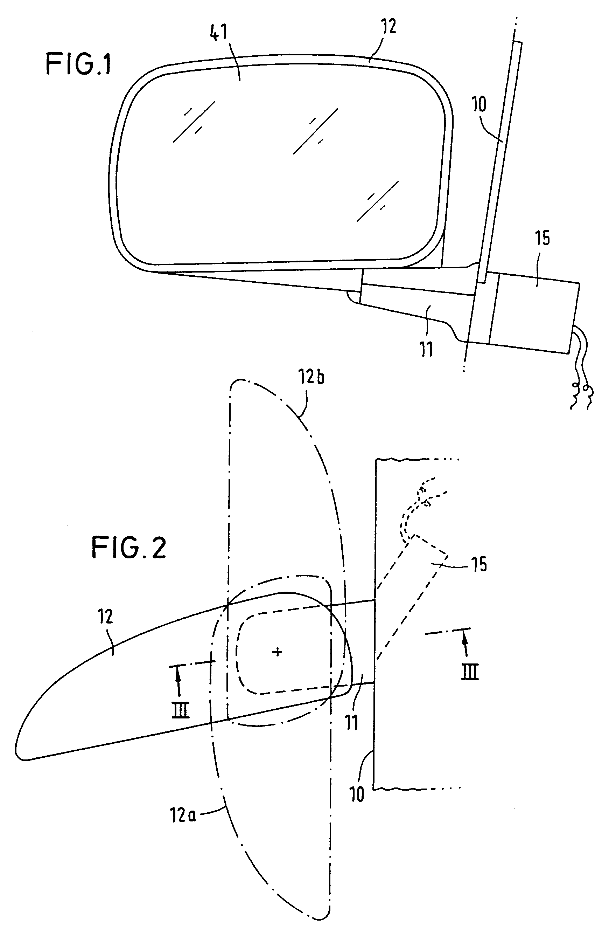

Gemäß Fig. 1 ist an der Außenwand 10 eines Fahrzeugs ein nach außen abstehender Spiegelfuß 11 befestigt, der das Spiegelgehäuse 12 trägt. Im Spiegelgehäuse 12 ist das Spiegelglas 41 verstellbar angebracht. Der Spiegelfuß 11 ist am Fahrzeug starr montiert, während das Spiegelgehäuse 12 in der in Fig. 2 dargestellten Weise abklappen kann, und zwar in die Position 12a nach hinten (entgegen der Fahrtrichtung) und in die Position 12b nach vorne. Dieses Abklappen wird durch die noch zu erläuternde Rastvorrichtung ermöglicht. Das motorische Verschwenken des Spiegelgehäuses 12 ist nur zwischen der Normalstellung und der Position 12a möglich.

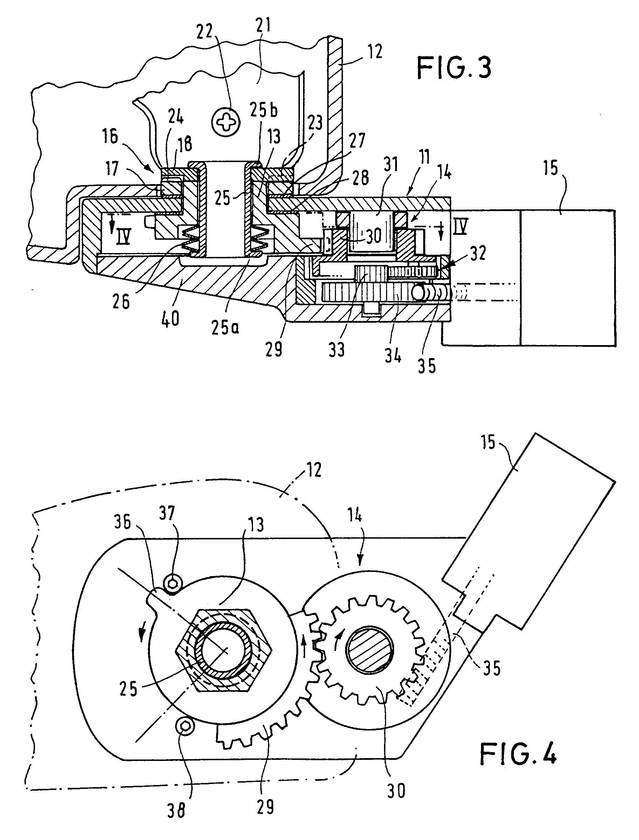

Gemäß Fig. 3 ragt aus dem Innern des hohlen Spiegelfußes 11 eine Welle 13 in eine Öffnung des Spiegelgehäuses 12 hinein. Diese Welle 13 ist eine Hohlwelle mit Mehrkant-Außenprofil. Die Welle 13 wird von dem Antrieb 14 angetrieben, der im wesentlichen im Innern des Spiegelfußes 11 untergebracht ist und der einen aus dem Spiegelfuß herausragenden, in der Fahrzeugwand untergebrachten Elektromotor 15 aufweist. Der Antrieb 14 ist imstande, die Welle 13 um ihre Achse zu drehen. Am ausgangsseitigen Ende der Welle 13 befindet sich die Rastvorrichtung 16, die aus einem fußseitigen Rastelement 17 und einem gehäuseseitigen Rastelement 18 besteht. Das fußseitige Rastelement 17 weist eine Mehrkantausnehmung 19 auf, die das Mehrkantprofil 20 der Welle 13 umgibt, so daß das Rastelement 17 drehfest mit der Welle 13 verbunden ist. Das gehäuseseitige Rastelement 18 ist mit einem Träger 21 verbunden, an dem mit Schrauben 22 das Spiegelgehäuse 12 starr befestigt ist und der die im Spiegelgehäuse enthaltenen Komponenten, z.B. einen Verstellmechanismus für das Spiegelglas, trägt. Über den Träger 21 ist das Rastelement 18 mit dem Gehäuse 12 starr verbunden.

Die Rastelemente 17 und 18 weisen an ihren aneinanderliegenden Stirnseiten zusammengreifende Rastteile 23 und 24 in Form von Vertiefungen und Vorsprüngen auf, wobei hier umfangsmäßig verteilt drei Paare von Rastteilen 23 und 24 vorgesehen sind, die in Winkelabständen von 120° angeordnet sind.

Die Welle 13 ist als Hohlwelle ausgebildet und durch die Welle 13 und das gehäuseseitige Rastelement 18 erstreckt sich ein Schaft 25, der hier als Hohlniet ausgebildet ist und der an seinen beiden Enden je einen radial abstehenden Flansch 25a,25b aufweist. Am unteren Flansch 25b stützt sich eine Feder 26 ab, die hier aus einem Tellerfederpaket besteht und die den Schaft 25 umgibt.

Die Feder 26 zieht das Rastelement 18 gegen das an der Oberwand des Spiegelfußes 11 abgestützte Rastelement 17.

Das Rastelement 17 ist an der Oberseite der Oberwand des Spiegelfußes 11 mit einem Gleitring 27 abgestützt. Ein weiterer Gleitring 28 befindet sich zwischen der Unterseite der Oberwand des Spiegelfußes und in einer nach oben gerichteten ringförmigen Schulter der Welle 13. Die Gleitringe 27 und 28 verringern die Reibung der Welle 13 und des Rastelements 17 am Spiegelfuß.

Am unteren Ende der Welle 13 befindet sich ein Verzahnungssegment 29, das mit dem Abtriebszahnrad 30 des Antriebs 14 kämmt. Das Abtriebszahnrad 30 ist an einem Achsstumpf 31 des Spiegelfußes gelagert und es wird durch ein Planetengetriebe 32 angetrieben, dessen Sonnenrad 33 mit einem Schneckenrad 34 verbunden ist. Mit dem Schneckenrad 34 steht eine Schnecke 35 in Eingriff, die mit der Ausgangswelle des Motors 15 verbunden ist. Der Motor 15 treibt also über die Schnecke 35 und das Planetenradgetriebe 32 das Abtriebszahnrad 30, welches über das Zahnsegment 29 die Welle 13 antreibt.

An der Welle 13 befindet sich ein radial abstehender Nocken 36, der die Drehbewegung der Welle 13 dadurch begrenzt, daß er gegen zwei Endanschläge 37,38 stoßen kann, welche einen Winkelbereich von etwa 90° eingrenzen.

Wenn das Spiegelgehäuse mit dem Motor 15 in die Position 12a gemäß Fig. 2 geschwenkt werden soll, treibt der Motor über die Schnecke 15 und das Planetenradgetriebe 32 die Welle 13 an, so daß der Nocken 36, der sich in der Normalstellung des Spiegelgehäuses am Anschlag 37 befindet, sich in Richtung auf den Endanschlag 38 bewegt. Die Schwenkbewegung des Spiegelgehäuses wird durch Anstoßens des Nockens 36 gegen den Endanschlag 38 begrenzt. Der Elektromotor 15 ist kurzschlußfest, d.h. er brennt nicht durch, wenn seine Ausgangswelle durch den Endanschlag blockiert wird. Das Zurückstellen des Spiegelgehäuses von der Position 12a in die Normalstellung erfolgt durch Umkehrung der Drehrichtung des Motors 15.

Wenn sich der Spiegel in der Normalstellung befindet und durch Anstoßen gegen ein Hindernis abklappen soll, hält der Antrieb 14, der durch das Schneckengetriebe 34,35 selbsthemmend ist, das Verznhungssegment 29 fest, so daß auch die Welle 13 und das fußseitige Rastelement 17 festgehalten werden. Übersteigt die Stoßkraft die Haltekraft der Rastvorrichtung 16, so gibt die Feder 26 nach und die Rastteile 23 und 24 rasten aus, so daß das Rastelement 18 zusammen mit dem Spiegelgehäuse 12 verschwenkt wird.

Das Schneckengetriebe 34,35 und das Planetenradgetriebe 32 sind in der als abnehmbarer Deckel ausgebildeten Bodenwand 40 des Spiegelfußes 11 untergebracht. An dieser Bodenwand 40 befindet sich auch der Motor 15.

**Patentansprüche**

1. Abklappbarer Rückspiegel, dessen Spiegelgehäuse (12) am Spiegelfuß (11) unter Auslösung einer Rastvorrichtung (16) schwenkbar ist, wobei die Rastvorrichtung ein mit dem Spiegelgehäuse (12) verbundenes gehäuseseitiges Rastelement (18) und ein fußseitiges Rastelement (17) aufweist,

   **dadurch gekennzeichnet,**

   daß die zusammengreifenden Rastelemente (17,18) der Rastvorrichtung gemeinsam relativ zum Spiegelfuß (11) drehbar sind und daß an dem fußseitigen Rastelement (17) ein selbsthemmender Antrieb (14) zum Abschwenken des Spiegelgehäuses (12) angreift.

2. Rückspiegel nach Anspruch 1, dadurch gekennzeichnet, daß der Antrieb (14) im Spiegelfuß (11) untergebracht ist.

3. Rückspiegel nach Anspruch 1 oder 2, dadurch gekennzeichnet, daß der Antrieb (14) eine von einem Motor (15) angetriebene Schnecke (35) aufweist.

4. Rückspiegel nach einem der Ansprüche 1-3, dadurch gekennzeichnet, daß das fußseitige Rastelement (17) drehfest mit einem Zahnsegment (29) oder Zahnrad verbunden ist, das mit einem Antriebszahnrad (30) des Antriebs (14) in Eingriff steht.

5. Rückspiegel nach einem der Ansprüche 1-4, dadurch gekennzeichnet, daß der Antrieb (14) eine Welle (13) treibt, die sich vom Spiegelfuß (11) in das Spiegelgehäuse (12) erstreckt und drehfest mit dem fußseitigen Rastelement (17) verbunden ist.

6. Rückspiegel nach Anspruch 5, dadurch gekennzeichnet, daß durch die als Hohlwelle ausgebildete Welle (13) ein Schaft (25) hindurchführt, der auch durch die beiden Rastelemente (17,18) hindurchgeht und eine Feder (26) trägt, die das gehäuseseitige Rastelement (18) gegen das fußseitige Rastelement (17) drückt.

7. Rückspiegel nach einem der Ansprüche 1-6, dadurch gekennzeichnet, daß die Schwenkbewegung des Spiegelgehäuses (12) durch am Spiegelfuß (11) vorgesehene Endanschläge (37,38) begrenzt ist und daß der Antrieb (14) einen kurzschlußfesten Elektromotor (15) enthält.

FIG.1

FIG.2

FIG. 3

FIG. 4

FIG.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | PATENT ABSTRACTS OF JAPAN<br>vol. 9, no. 307 (M-435)(2030) 4. Dezember 1985<br>& JP-A-60 143 154 ( MURAKAMI KAMEIDO K.K. ) 29. Juli 1985<br>* Zusammenfassung *<br>--- | 1-4 | B60R1/06 |
| Y | PATENT ABSTRACTS OF JAPAN<br>vol. 11, no. 238 (M-613)(2685) 5. August 1987<br>& JP-A-62 050 249 ( MITSUI MINING & SMELTING CO LTD ) 4. März 1987<br>* Zusammenfassung *<br>----- | 1-4 | |
| | | | **RECHERCHIERTE SACHGEBIETE (Int. Cl.5)**<br><br>B60R |

Der vorliegende Recherchenbericht wurde für alle Patentansprüche erstellt

| Recherchenort | Abschlußdatum der Recherche | Prüfer |
|---|---|---|
| DEN HAAG | 16 SEPTEMBER 1992 | AREAL CALAMA A. |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes
Dokument